# EUROPEAN PATENT SPECIFICATION

(11) **EP 2 073 462 B1**
(45) Date of publication and mention of the grant of the patent: **04.03.2015**
(21) Application number: 07291609.1
(22) Date of filing: 21.12.2007
(51) Int. Cl.: H04L 12/715, H04L 12/723, H04L 12/721, H04L 12/717

(54) **Method for establishing a connection in multi-domain networks**
Verfahren zum Aufbau einer Verbindung in Netzen mit mehreren Domänen
Procédé pour établir une connexion dans des réseaux multi-domaines

(43) Date of publication of application: 24.06.2009
(73) Proprietor: ALCATEL LUCENT, 92100 Boulogne-Billancourt (FR)
(72) Inventor: Douville, Richard, 91310 Longpont sur Orge (FR)
(74) Representative: Croonenbroek, Thomas Jakob

(56) References cited:
- EP-A- 1 675 326
- RICH BRADFORD (ED) JP VASSEUR CISCO SYSTEMS ET AL: "Preserving Topology Confidentiality in Inter-Domain Path Computation Using a Key-Based Mechanism; draft-ietf-pce-path-key-01.txt" IETF STANDARD-WORKING-DRAFT, INTERNET ENGINEERING TASK FORCE, IETF, CH, vol. pce, no. 1, 12 September 2007 (2007-09-12), XP015051558 ISSN: 0000-0004
- FANG L ET AL: "Security Framework for MPLS and GMPLS Networks; draft-ietf-mpls-mpls-and-gmpls-security-fr amework-00.txt" IETF STANDARD-WORKING-DRAFT, INTERNET ENGINEERING TASK FORCE, IETF, CH, vol. mpls, September 2007 (2007-09), XP015051467 ISSN: 0000-0004
- BRYSKIN I ET AL: "Policy Enabled PAth Computation MEthod Internet draft V0.3" INTERNET-DRAFT INFORMATIONAL DRAFT, XX, XX, 31 October 2007 (2007-10-31), pages 1-34, XP002467627
- FARREL OLD DOG CONSULTING J-P VASSEUR CISCO SYSTEMS A ET AL: "A Path Computation Element (PCE)-Based Architecture; rfc4655.txt" IETF STANDARD, INTERNET ENGINEERING TASK FORCE, IETF, CH, August 2006 (2006-08), XP015047407 ISSN: 0000-0003
- LE ROUX FRANCE TELECOM R JACOB BRIGHTHAUL R DOUVILLE ALCATEL-LUCENT J L: "Carrying a Contract Identifier in the PCE communication Protocol (PCEP); draft-leroux-pce-contract-id-01.txt", IETF STANDARD-WORKING-DRAFT, INTERNET ENGINEERING TASK FORCE, IETF, CH, no. 1, 1 March 2007 (2007-03-01), XP015050129, ISSN: 0000-0004

## Description

### BACKGROUND OF THE INVENTION

The present invention relates to the field of communication networks.

In said communication networks, data transfers can be controlled by multi-protocol label switching (MPLS) and generalized MPLS (GMPLS) mechanisms where label switched paths (LSP) may be computed by path computation elements (PCE). In the context of end-to-end service delivery, some connection establishments must be set up "inter-domain" meaning that the LSP crosses multiple domains, such as autonomous systems (AS). The path may be computed by multiple PCEs that need to cooperate, whereby each PCE is responsible for computing a segment of the path. However, when ASs are administrated by separate service providers, confidentiality rules for a PCE would be broken by supplying a path segment to a PCE in another domain because such supply discloses internal topology information. Moreover LSP establishment between the different ASs requires authorization to respect the security conditions. To solve these problems, a project intends to define a service layer that can handle the economic agreement purposes relative to a service delivery between the different providers (network providers, content delivery providers...). The service layer process results in the creation of a contract between the different providers identified by a contract ID (contract identifier). The remaining problem is how to carry this contract ID to authorize the signaling messages to be handled through the path of the future connection across the domains boundaries. The Internet draft draft-letf-pce-path-key-01.txt from Rich Bradford entitled "preserving topology confidentiality in inter-domain path computation using a key based mechanism" discloses the use of a path key subobject to transmit a path key. Furthermore, the other internet draft draft-leroux-pce-contract-id-01.txt from J.L. Le Roux entitled "carrying a contract identifier in the PCE communication protocol (PCEP)" refers to the transmission of a contract ID as a new object in the PCEP protocol.

### SUMMARY OF THE INVENTION

One object of the present invention is to overcome the precited drawbacks of the state of the art and provide a method for a carrying the contract ID without modifying the current signaling messages organization. Indeed, modifications of the signaling message extensions are difficult to handle as they need approval by the standard organizations.

This is achieved by a method for establishing a connection from an ingress node to an egress node in multi-domain networks using a service layer contract ID wherein said contract ID is encoded into the path-key sub-object (PKS) extension, according to claim 1.

Preferably, routing a path from said ingress to said egress node is achieved by the cooperation of the path computation elements (PCEs) of each domain, said path computation elements (PCEs) being authorized to achieve path computation for path computation client (PCC) of other domains through a domain policy manager (PM). During collaborative path computation between several path computation elements (PCEs), each PCE that request a path computation to another path computation element (PCE) become a path computation client (PCC) for this last one.

Alternatively, the method comprises the steps of
- establishing a contract between the different domain service management system (SMS) leading to the creation of a contract ID,
- transmitting said contract ID to the policy manager of each domain,
- sending a label switch path setup request from the service management system (SMS) corresponding to the ingress node domain to the network management system (NMS) of said domain,
- sending a path computation request (PCReq) from the ingress node to the egress node through the different path computation elements (PCEs) of each domain along the path,
- sending back to ingress node a path computation reply (PCRep) comprising either a no-path object if the contract ID is not valid or a path corresponding to the negotiated service if the intermediate path computation elements are authorized by the corresponding domain policy managers,
- reserving resources along the selected path with a resource reservation protocol-traffic engineering (RSVP-TE) comprising a path key sub-object and the corresponding contract ID in the path key sub-object extension to establish the connection.

Preferably, the step of transmitting said contract ID to the policy manager of each domain comprises transmitting in addition contract parameters to the policy manager.

Furthermore the object of the present invention is achieved by a path computation element (PCE) according to claim 5.

Preferably, processing a path computation request (Pcreq), comprising a path-key sub-object (PKS), comprises decrypting the path-key sub-object (PKS), interacting with the policy manager (PM) to get the authorization to compute the requested path and optionally added constraints for the path computation, computing and returning the computed path if permission is given by the policy manager (PM) and returning a no-path message otherwise.

### BRIEF DESCRIPTION OF THE DRAWINGS

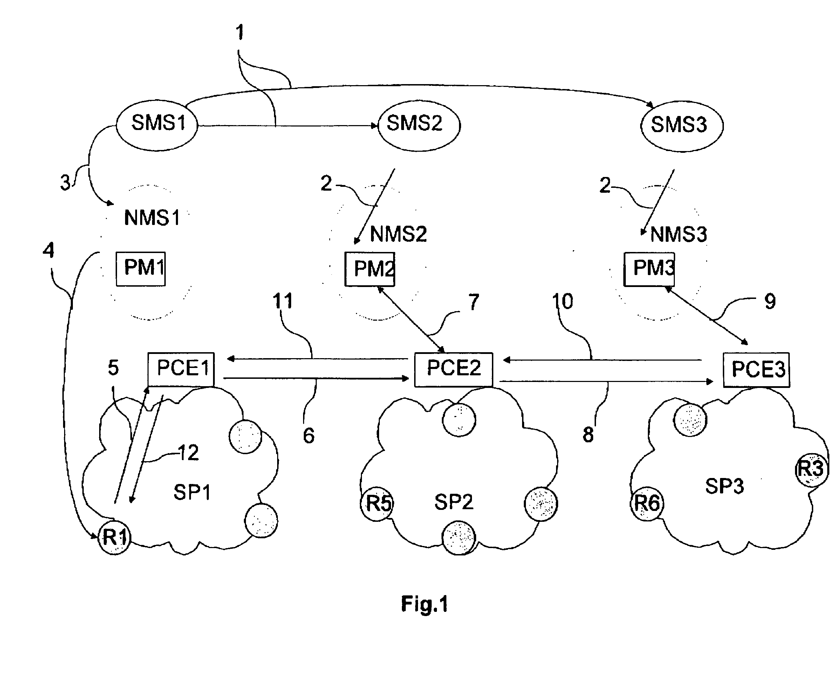

FIG.1 is a diagram of the establishment of a connection in a generalized multi-protocol label switching (GMPLS) controlled network according to the present invention.

### DETAILED DESCRIPTION OF THE INVENTION

As used herein, the term "resource reservation protocol-traffic engineering (RSVP-TE)" refers to a protocol taking into considerations network constraint parameters, such as available bandwidth, to allow the required resources reservation.

As used herein, the term "path computation element (PCE)" refers to an entity (component, application or network node) that is capable of computing a network path or route based on a network graph and applying computational constraints.

As used herein, the term "ingress node" refers to the entering node of the multi-protocol label switching (MPLS) or generalized MPLS (GMPLS) network.

As used herein, the term "egress node" refers to the output node of the multi-protocol label switching (MPLS) or generalized MPLS (GMPLS) network.

The present invention refers to a method for carrying a contract ID or contract identifier in the case of an end-to-end connection service. Said contract ID is created by a service layer. The terms of the contract can refer to connection properties such as the connection bit-rate,the ingress and egress nodes or the level of availability of the connection for example process and results from a negotiation between the different service providers concerned by the connection.. This contract ID needs then to be carried by signaling messages along the path in order to get the authorization to compute the path from the ingress node to the egress node and to realize the resources reservation according to the contract. The idea is to encode this contract ID in the path key segment (PKS). Said PKS comprises a unique key per service provider, the identifier of a PCE that can interpret the key and the contract ID. Thus, said PKS is able to map a confidential path segment according to the contract.

To better understand the present invention, Fig.1 shows a diagram of a possible organization of the service layer and the connection establishment in a generalized multi-protocol label switching (GMPLS) network. The functions of the various elements shown in the Figure, including any functional blocks labeled as SMS, NMS, PM and PCE, may be provided through the use of dedicated hardware as well as hardware capable of executing software in association with appropriate software. When provided by a processor, the functions within one domain may he provided hy a single dedicated processor, by a single shared processor, or by a plurality of individual processors, some of which may be shared. Moreover, explicit use of the term "processor" or "controller" should not he construed to refer exclusively to hardware capable of executing software, and may implicitly include, without limitation, digital signal processor (DSP) hardware, network processor, application specific integrated circuit (ASIC), field programmable gate array (FPGA), read-only memory (ROM) for storing software, random access memory (RAM), and non-volatile storage. Other hardware, conventional and/or custom, may also be included.

In this example, a request is made to establish a connection between an ingress node R1 of a first service provider SP1 and an egress node R3 of another service provider SP3. The first step (step 1-arrow 1) is a negotiation between the different service management systems (SMS) of the different service providers (SP) to define the requested connection conditions. Said negotiation leads to the creation of a contract identified by a contract ID. Said contract ID and the parameters of thc contract are then sent to the policy managers (PM) of the different domains intervening in the negotiation (step 2-arrow 2). It has to be noted that the terms of the contract or contract ID value can be different for the different domains of a common LSP.

The request comprising the contract ID is transmitted to the network management system (NMS1) corresponding to SP1 (step 3-arrow 3). Said NMS1 triggers a LSP setup to the node R1 including an explicit route object (ERO) that include necessary path key sub-object with the defined Contract IDs (step 4-arrow 4). According to the received explicit route object (ERO), R1 knows that it must contact the PCE1 to translate a path key sub-object in a explicit path segment. R1 is therefore a path computation client (PCC) requiring a path computation to the path computation element (PCE1)of SP1 (step 5-arrow 5). This path computation request (PCreq) comprises on the one hand the address of the destination node R3 and on the other hand an include route object (IRO) that correspond to the explicit route object (ERO) received by R1 from NMS1 where the path-key sub-objects (PKS) (one per crossed domain) are encoded according to the path computation element protocol (PCEP). Said PKSs comprise, for their respective domain, the desired path for the connection and the contract ID of the corresponding domain. PCE1 manages the path computation inside SP1, (from R1 to the entering node of the next domain (R5) in the present case) using the PKS corresponding to SP1. The respect of the connection properties specified in the contract is achieved by policy decision point (PDP) and policy enforcement point (PEP), implemented for example as softwares within the PCE. The PCreq is then forwarded to the path computation element (PCE) of the next service provider notified in the Pcreq according to the include route object (IRO), PCE2 in the present example (step 6-arrow 6).
PCE2 requests from its policy manager (PM2) the authorization to compute the requested path identified by the PKS corresponding to SP2 which is carried in the PCreq (step 7-arrow 7). Said PM2 checks if the contract ID and the path request parameters correspond to a contract ID provided by the SMS2 and, if it is the case, authorizes PCE2 to continue the computation and optionally adds some path computation constraints. PCE2 achieves the path computation from node R5 to node R6 and forwards the request to PCE3 (step8-arrow 8) that is designated by the IRO as next PCE. It could happen that no satisfactory path can be found by the PCE. In such situation, when no feasible solution is found for a constrained path computation, the PCE returns an error message.
In the same way, PCE3 asks its policy manager PM3 (step 9-arrow 9) and realizes the path computation from node R6 to node R3 according to the PKS corresponding to SP3. A path computation reply (PCrep) is then sent back from PCE3 to R1 through PCE2 and PCE1 (step 10-arrows 10, 11 and 12) according to the path computation element protocol (PCEP). The PCrep message contains either a no-path object if the key or the contract ID is unknown by PCE3 or PCE2 or a explicit route object (ERO) corresponding to the negotiated service. This ERO can be an explicit route if no confidentiality is required or an encoded path with PKS.
If R1 receives a PCrep with a specified path, a resource reservation protocol-traffic engineering (RSVP-TE) is launched on the specified path to realize the label switch path (LSP) and to establish the connection according to the contract. The RSVP message contains the explicit route object (ERO) returned by PCE1 that may comprise path-keys and contract ID in order to obtain the connection authorizations from the different PCEs.

This is only an example of a possible organization of the service layer and of the possible interactions between the SMS, NMS, PCC, PCE and PM but other configurations are possible within the scope of the present invention.

Thus, the use of the contract ID allows to ensure the confidentiality rules. Besides, the encoding of said contract ID in the path-key extension of the RSVP-TE signaling messages provides a solution to carry and transparently handle this contract ID to authorize the establishment of inter-provider label switching paths (LSP) without modifying the existing extensions of said RSVP-TE signaling messages.

## Claims

1. Method for establishing a connection from an ingress node to an egress node in multi-domain multi-protocol label switching "MPLS" and generalized MPLS "GMPLS" networks using a contract ID which refers to a contract comprising connection properties and resulting from a negotiation between the different service providers concerned by the connection, the said contract ID being created by a service layer, **characterized in that** said contract ID is encoded into a path-key sub-object PKS extension, the said extension being encoded according to a path computation element protocol PCEP and transmitted within an include route object IRO in a path computation request PCreq from the ingress node to a path computation element PCE, and a path computation reply PCrep comprising an explicit route object ERO being sent back from the PCE to the ingress node in response to the said PCreq, the ERO being used to reserve resources and to establish the connection according to the contract.

2. Method for establishing a connection from an ingress node to an egress node in multi-domain networks using a contract ID in accordance with claim 1 further **characterized in that** routing a path from said ingress to said egress node is achieved by the cooperation of the path computation elements "PCEs" of each domain, said path computation elements "PCEs" being authorized to achieve path computation through a domain policy manager "PM" ( 7 and 9).

3. Method for establishing a connection from an ingress node to an egress node in multi-domain networks using a service layer contract ID in accordance with claims 1 or 2 further **characterized in that** said method comprises the steps of
- establishing a contract between the different domain service management system "SMS" leading to the creation of a contract ID (1),
- transmitting said contract ID to the policy manager of each domain (2),
- sending a label switch path setup request from the service management system "SMS" corresponding to the ingress node domain to the network management system "NMS" of said domain (step 3),
- sending a path computation request "PCReq" from the ingress node to the egress node through the different path computation elements "PCEs" of each domain along the path (steps 4 to 8),
- sending back to ingress node a path computation reply "PCRep" comprising either a no-path object if the contract ID is not valid or a path corresponding to the negotiated service if the intermediate path computation elements are authorized by the corresponding domain policy managers (steps 10 to 12),
- reserving resources along the selected path with a resource reservation protocol-traffic engineering "RSVP-TE" comprising a path key sub-object and the corresponding contract ID in the path key sub-object extension to establish the connection.

4. Method for establishing a connection from an ingress node to an egress node in multi-domain networks using a contract ID in accordance with claim 3 further **characterized in that** the step of transmitting said contract ID to the policy manager of each domain comprises in addition transmitting contract parameters to the policy manager.

5. Path computation element "PCE" of a MPLS/GMPLS network domain **characterized in that** said path computation element is adapted to receive and process a path computation request, PCreq, comprising a path-key sub-object PKS extension with a contract ID encoded within, the said path computation request PCreq coming from another MPLS/GMPLS network domain and such that the contract ID refers to a contract comprising connection properties and resulting from a negotiation between different service providers, the said contract ID being created by a service layer and encoded in the PKS extension, the said extension being encoded according to a path computation element protocol PCEP and transmitted within an include route object, IRO, in the PCreq, the PCE being further adapted to send back a path computation reply PCrep in response to the said PCreq, the PCrep comprising an explicit route object ERO being used to reserve resources and to establish the connection according to the contract.

6. Path computation element "PCE" of a MPLS/GMPLS network domain in accordance with claim 5 wherein processing a path computation request "Pcreq", comprising a path-key sub-object "PKS" further comprises decrypting the path-key sub-object "PK" extension, interacting with the policy manager "PM" to get the authorization to compute the requested path, computing and returning the computed path if permission is given by the policy manager "PM" and returning a no-path message otherwise.

## Patentansprüche

1. Verfahren zum Aufbau einer Verbindung von einem Eingangsknoten zu einem Ausgangsknoten in Multi-Protocol Label Switching bzw. MPLS- und verallgemeinertes MPLS bzw. GMPLS-Netzwerken mit mehreren Domains unter Verwendung einer Vertrags-ID, die sich auf einen Vertrag bezieht, welcher Verbindungseigenschaften umfasst und das Ergebnis einer Verhandlung zwischen verschiedenen an der Verbindung beteiligten Dienstanbietern ist, wobei die besagte Vertrags-ID durch eine Dienstschicht erstellt wird, **dadurch gekennzeichnet, dass** die besagte Vertrags-ID in eine Pfadschlüssel-Subobjekt- bzw. PKS-Erweiterung verschlüsselt wird, wobei die besagte Erweiterung gemäß einem Pfadberechnungselementprotokoll PCEP verschlüsselt und innerhalb eines "Include Route"-Objektes IRO in einer Pfadberechnungsanforderung PCreq von dem Eingangsknoten an ein Pfadberechnungselement PCE übertragen wird und in Reaktion auf die besagte PCreq eine Pfadberechnungsantwort PCrep, welche ein "Explicit Route"-Objekt ERO enthält, von dem PCE an den Eingangsknoten zurückgesendet wird, wobei das ERO für die Reservierung von Ressourcen und für den Aufbau der Verbindung gemäß dem Vertrag verwendet wird.

2. Verfahren zum Aufbau einer Verbindung von einem Eingangsknoten zu einem Ausgangsknoten in Netzwerken mit mehreren Domains unter Verwendung einer Vertrags-ID gemäß Anspruch 1, weiterhin **dadurch gekennzeichnet, dass** das Routen eines Pfads von dem besagten Eingangsknoten zu dem besagten Ausgangsknoten durch das Zusammenwirken der Pfadberechnungselemente "PCEs" einer jeden Domain erfolgt, wobei die besagten Pfadberechnungselemente "PCEs" berechtigt sind, die Pfadberechnung über einen Domain-Richtlinien-Manager "PM" durchzuführen (7 und 9).

3. Verfahren zum Aufbau einer Verbindung von einem Eingangsknoten zu einem Ausgangsknoten in Netzwerken mit mehreren Domains unter Verwendung einer Dienstschicht-Vertrags-ID gemäß Anspruch 1 oder 2, weiterhin **dadurch gekennzeichnet, dass** das besagte Verfahren die folgenden Schritte umfasst:
- Erstellen eines Vertrags zwischen dem Dienstmanagementsystem "SMS" der verschiedenen Domains, welches zur Erzeugung der Vertrags-ID führt,
- Übertragen der besagten Vertrags-ID an den Richtlinien-Manager (2),
- Senden einer Label Switch-Pfadaufbauanforderung von dem Dienstmanagementsystem "SMS", welches der Eingangsknoten-Domain entspricht, an das Netzwerkmanagementsystem "NMS" der besagten Domain (Schritt 3),
- Senden einer Pfadberechnungsanforderung "PCReq" von dem Eingangsknoten an den Ausgangsknoten über die verschiedenen Pfadberechnungselemente "PCEs" einer jeden Domain entlang des Pfades (Schritte 4 bis 8),
- Zurücksenden einer Pfadberechnungsantwort "PCRep", welche entweder ein "No-Path"-Objekt enthält, wenn die Vertrags-ID ungültig ist, oder einen Pfad, welcher dem verhandelten Dienst entspricht, enthält, wenn die intermediären Pfadberechnungselemente von den entsprechenden Domain-Richtlinien-Managern autorisiert sind, an den Eingangsknoten (Schritte 10 bis 12),
- Reservieren der Ressourcen entlang des ausgewählten Pfads mit einem Traffic-Engineering-Ressourcenreservierungsprotokoll "RSVP-TE", welches ein Pfadschlüssel-Subobjekt und die entsprechende Vertrags-ID in der Pfadschlüssel-Subobjekt-Erweiterung umfasst, um die Verbindung aufzubauen.

4. Verfahren zum Aufbau einer Verbindung von einem Eingangsknoten zu einem Ausgangsknoten in Netzwerken mit mehreren Domains unter Verwendung einer Vertrags-ID gemäß Anspruch 3, weiterhin **dadurch gekennzeichnet, dass** der Schritt des Übertragens der besagten Vertrags-ID an den Richtlinien-Manager einer jeden Domain zusätzlich das Übertragen von Vertragsparametern an den Richtlinien-Manager umfasst.

5. Pfadberechnungselement "PCE" einer MPLS/GMPLS-Netzwerk-Domain, **dadurch gekennzeichnet, dass** das besagte Pfadberechnungselement dazu ausgelegt ist, eine Pfadberechnungsanforderung, PCreq, welche eine Pfadschlüssel-Subobjekt- bzw. PKS-Erweiterung mit einer darin verschlüsselten Vertrags-ID enthält, zu empfangen und zu verarbeiten, wobei die Pfadberechnungsanforderung PCreq von einer anderen MPLS/GMPLS-Netzwerk-Domain kommt, so dass sich die Vertrags-ID auf einen Vertrag, welcher Verbindungseigenschaften enthält und das Ergebnis einer Verhandlung zwischen verschiedenen Dienstanbietern ist, bezieht, wobei die besagte Vertrags-ID durch eine Dienstschicht erstellt und in der PKS-Erweiterung verschlüsselt wird, wobei die besagte Erweiterung gemäß einem Pfadberechnungselementprotokoll PCEP verschlüsselt und innerhalb eines "Include Route"-Objektes, IRO, in der Pfadberechnungsanforderung PCreq übertragen wird, wobei das PCE weiterhin dazu ausgelegt ist, in Reaktion auf die besagte PCreq eine Pfadberechnungsantwort PCrep zurückzusenden, wobei die PCrep ein "Explicit Route"-Objekt ERO enthält, welches für die Reservierung von Ressourcen und für den Aufbau der Verbindung gemäß dem Vertrag verwendet wird.

6. Pfadberechnungselement "PCE" einer MPLS/GMPLS-Netzwerk-Domain nach Anspruch 5, wobei das Verarbeiten einer Pfadberechnungsanforderung "Pcreq", welche ein Pfadschlüssel-Subobjekt "PKS" enthält, weiterhin das Entschlüsseln der Pfadschlüssel-Subobjekt- bzw. PKS-Erweiterung, welche mit dem Richtlinien-Manager "PM" zusammenwirkt, um eine Genehmigung für die Berechnung des angeforderten Pfads zu erhalten, das Berechnen und das Zurücksenden des berechneten Pfads, wenn die Genehmigung von dem Richtlinien-Manager "PM" erteilt wird, und anderenfalls das Zurücksenden einer "No-Path"-Nachricht umfasst.

## Revendications

1. Procédé pour établir une connexion entre un noeud d'entrée et un noeud de sortie dans une commutation d'étiquettes multiprotocole « MPLS » multi-domaines et des réseaux MPLS « GMPLS » généralisés en utilisant un ID de contrat qui désigne un contrat comprenant des propriétés de connexion et résultant d'une négociation entre les différents fournisseurs de services concernés par la connexion, ledit ID de contrat étant créé par une couche de service, **caractérisé en ce que** ledit ID de contrat est codé dans une extension de sous-objet de clé de chemin PKS, ladite extension étant codée conformément à un protocole d'élément de calcul de chemin PCEP et transmis dans un objet d'inclusion de route IRO dans une demande de calcul de chemin PCreq à partir du noeud d'entrée vers un élément de calcul de chemin PCE et une réponse de calcul de chemin PCrep comprenant un objet de route explicite ERO renvoyé depuis le PCE vers le noeud d'entrée en réponse à ladite PCreq, l'ERO étant utilisé pour réserver des ressources et pour établir la connexion conformément au contrat.

2. Procédé pour établir une connexion entre un noeud d'entrée et un noeud de sortie dans des réseaux multi-domaines en utilisant un ID de contrat selon la revendication 1, **caractérisé en outre en ce que** l'acheminement d'un chemin entre ladite entrée et ledit noeud de sortie est réalisé par la coopération des éléments de calcul de chemin « PCE » de chaque domaine, lesdits éléments de calcul de chemin « PCE » étant autorisés à réaliser un calcul de chemin par l'intermédiaire d'un gestionnaire de politique « PM » de domaine (7 et 9).

3. Procédé pour établir une connexion entre un noeud d'entrée et un noeud de sortie dans des réseaux multi-domaines en utilisant un ID de contrat selon la revendication 1 ou 2, **caractérisé en outre en ce que** ledit procédé comprend les étapes suivantes
- établir un contrat entre les différents systèmes de gestion des services « SMS » de domaine entraînant la création d'un ID de contrat (1),
- transmettre ledit ID de contrat au gestionnaire de politique de chaque domaine (2),
- envoyer une demande de configuration de chemin commuté par étiquette à partir du système de gestion des services « SMS » correspondant au domaine du noeud d'entrée vers le système de gestion de réseau « NMS » dudit domaine (étape 3),
- envoyer une demande de calcul de chemin « PCReq » à partir du noeud d'entrée vers le noeud de sortie par l'intermédiaire des différents éléments de calcul de chemin « PCE » de chaque domaine le long du chemin (étapes 4 à 8),
- renvoyer au noeud d'entrée une réponse de calcul de chemin « PCRep » comprenant un objet de non-chemin si l'ID de contrat n'est pas valide ou un chemin correspondant au service négocié si les éléments de calcul de chemin intermédiaires sont autorisés par les gestionnaires de politique de domaine correspondants (étapes 10 à 12),
- réserver des ressources le long du chemin sélectionné avec un protocole de réservation de ressources-ingénierie du trafic « RSVP-TE » comprenant un sous-objet de clé de chemin et l'ID de contrat correspondant dans l'extension de sous-objet de clé de chemin pour établir la connexion.

4. Procédé pour établir une connexion entre un noeud d'entrée et un noeud de sortie dans des réseaux multi-domaines en utilisant un ID de contrat selon la revendication 3, **caractérisé en outre en ce que** l'étape de transmission dudit ID de contrat au gestionnaire de politique de chaque domaine comprend en outre la transmission de paramètres de contrat au gestionnaire de politique.

5. Élément de calcul de chemin « PCE » d'un domaine de réseau MPLS/GMPLS **caractérisé en ce que** ledit élément de calcul de chemin est adapté pour recevoir et traiter une demande de calcul de chemin, PCreq, comprenant une extension de sous-objet de clé de chemin PKS avec un ID de contrat codé à l'intérieur, ladite demande de calcul de chemin PCreq provenant d'un autre domaine de réseau MPLS/GMPLS et de telle sorte que l'ID de contrat désigne un contrat comprenant des propriétés de connexion et résultant d'une négociation entre différents fournisseurs de services, ledit ID de contrat étant créé par une couche de service et codé dans l'extension PKS, ladite extension étant codée conformément à un protocole d'élément de calcul de chemin PCEP et transmise dans un objet d'inclusion de route, IRO, dans la PCreq, le PCE étant en outre adapté pour renvoyer une réponse de calcul de chemin PCrep en réponse à ladite PCreq, la PCrep comprenant un objet de route explicite ERO utilisé pour réserver des ressources et pour établir la connexion conformément au contrat.

6. Élément de calcul de chemin « PCE » d'un domaine de réseau MPLS/GMPLS selon la revendication 5 dans lequel le traitement d'une demande de calcul de chemin « Pcreq », comprenant un sous-objet de clé de chemin PKS comprend en outre le décryptage de l'extension de sous-objet de clé de chemin « PKS », l'interaction avec le gestionnaire de politique « PM » pour obtenir l'autorisation de calculer le chemin demandé, le calcul et le renvoi du chemin calculé si la permission est donnée par le gestionnaire de politique « PM », sinon le renvoi d'un message de non-chemin.
